# EUROPEAN PATENT SPECIFICATION

(11) **EP 1 251 160 B1**
(45) Date of publication and mention of the grant of the patent: **14.09.2005**
(21) Application number: 02006702.1
(22) Date of filing: 22.03.2002
(51) Int. Cl.: C09K 19/30

(54) **Liquid-crystalline medium**
Flüssigkristallines Medium
Milieu liquide cristallin

(30) Priority: 20.04.2001 EP 01109740
(43) Date of publication of application: 23.10.2002
(73) Proprietor: Merck Patent GmbH, 64293 Darmstadt (DE)
(72) Inventor: Seung-Eun, Lee, Yokohama, Kanagawa Pref. 220-0042 (JP); Nobuo, Kubo, Kanagawa-ken 243-0036 (JP); Masahiro, Iijima, Zama city, Kanagawa Pref. 228-0023 (JP); Hideo, Ichinoso, Odawara-shi, Kanagawa Pref. 250-0034 (JP); Yukiomi, Tanaka, Ayase City, Kanagawa Pref. 252-1121 (JP); Shinji, Nakajima, Atsugi-shi, Kanagawa-pref. (JP); Yasushi, Sugiyama, Atsugi-city, Kanagawa pref. 243-0303 (JP); Takanori, Takeda, Atsugi-shi, Kanagawa-pref. (JP); Klasen-Memmer, Melanie, Dr., 67259 Heuchelheim (DE); Weller, Clarissa, 64285 Darmstadt (DE)

(56) References cited:
- EP-A- 0 474 062
- EP-A- 1 061 113
- DE-A- 19 607 043
- GB-A- 2 323 603
- US-A- 6 066 268
- US-B1- 6 217 953

## Description

The invention relates to a liquid-crystalline medium based on a mixture of polar compounds having negative dielectric anisotropy, in particular for electro-optical displays having active matrix addressing based on the ECB effect.

The principle of electrically controlled birefringence, the ECB effect, or the DAP effect (deformation of aligned phases) was described for the first time in 1971 (M. F. Schieckel and K. Fahrenschon, "Deformation of nematic liquid crystals with vertical orientation in electrical fields", Appl. Phys. Lett. 19 (1971), 3912). This was followed by papers by J. F. Kahn (Appl. Phys. Lett. 20 (1972), 1193) and G. Labrunie and J. Robert (J. Appl. Phys. 44 (1973), 4869).

Papers by J. Robert and F. Clerc (SID 80 Digest Techn. Papers (1980), 30), J. Duchene (Displays 7 (1986), 3) and H. Schad (SID 82 Digest Techn. Papers (1982), 244) have shown that liquid-crystalline phases must have high values for the ratio between the elastic constants K₃/K₁, high values for the optical anisotropy Δn and values for the dielectric anisotropy Δε of -0.5 to -5 in order to be usable for high-information display elements based on the ECB effect. Electro-optical display elements based on the ECB effect have homeotropic edge alignment.

A newer variant of ECB displays are active matrix displays based on the VA (vertically aligned) effect, also known as VAN (vertically aligned nematic), or the VAC (vertically aligned cholesteric) effect. VA displays have been described, inter alia, in S. Yamauchi et al., SID Digest of Technical Papers, pp. 378ff (1989), and VAC displays have been described in K.A. Crabdall et al., Appl.Phys.Lett. 65, 4 (1994).

Like the ECB displays which were already known earlier, the more recent VA and VAC displays contain a layer of liquid crystalline medium with a negative dielectric anisotropy Δε between two transparent electrodes. The molecules in the liquid crystal layer have a homeotropic or tilted homeotropic alignment in the switched-off state, i.e. are aligned substantially perpendicular to the electrode surfaces. Owing to the negative Δε, realignment of the liquid crystal molecules parallel to the electrode surfaces takes place in the switched-on state.

In contrast to conventional ECB displays, in which the liquid crystal molecules in the switched-on state have a parallel aligment with uniform preferential direction over the entire liquid crystal cell, this uniform parallel alignment in VA and VAC displays is usually restricted only to small domains within the cell. Disclinations exist between these domains, which are also known as tilt domains. In another type of VA displays the domains are separated by polymer walls.

As a consequence, VA and VAC displays have a greater viewing-angle independence of the contrast and of the grey shades than conventional ECB displays. In addition, VA displays are often simpler to produce, since additional treatment of the electrode surface, like for example by rubbing, for uniform alignment of the molecules is no longer necessary.

In contrast to VAN displays, the liquid crystal media in VAC displays additionally comprise one or more chiral compounds, like for example chiral dopants, which in the switched-on state produce a helical twist of the liquid crystal molecules in the liquid crystal layer by an angle that is typically between 0 and 360 °. The twist angle in the prefererred case is about 90 °.

In particular for these novel VA and VAC displays, special customized liquid crystal media are rquired. For example, it has beend found that the liquid crystal media of negative dielectric anisotropy disclosed hitherto, as described for example in EP 0 474 062, have low values for the voltage holding ratio (HR) after UV exposure. They are therefore not very suitable for use in the displays described above.

The industrial application of the above described effects in electro-optical display elements requires LC phases which must satisfy a multiplicity of requirements. Particularly important here are chemical resistance to moisture, air and physical effects such as heat, radiation in the infra-red, visible and ultra-violet regions and direct and alternating electrical fields. Furthermore, LC phases which can be used industrially need a liquid-crystalline mesophase in a suitable temperature range and low viscosity.

None of the series of compounds having a liquid-crystalline mesophase which have been disclosed hitherto includes a single compound which meets all these requirements. Generally, therefore, mixtures of from two to 25, preferably from three to 18, compounds are prepared to give substances which can be used as LC phases. However, ideal phases cannot easily be produced in this way, since liquid-crystal materials having substantially negative dielectric anisotropy and adequate long-term stability were hitherto not available.

Matrix liquid-crystal displays (MLC displays) are known. Examples of nonlinear elements which can be used to individually switch the individual pixels are active elements (i.e. transistors). This is then referred to as an "active matrix", and a differentiation can be made between two types:
1. MOS (metal oxide semiconductor) transistors on silicon wafers as substrate,
2. Thin-film transistors (TFT) on a glass plate as substrate.

In the case of type 1, the electro-optical effect used is usually dynamic scattering or the guest-host effect. The use of monocrystalline silicon as substrate material restricts the display size, since even the modular assembly of various part-displays results in problems at the joins.

In the case of the more promising type 2, which is preferred, the electro-optical effect used is usually the TN effect. A distinction is made between two technologies: TFTs comprising compound semi-conductors, such as, for example, CdSe, or TFTs based on polycrystalline or amorphous silicon. Intensive research efforts are being made worldwide in the latter technology.

The TFT matrix is applied to the inside of one glass plate of the display, while the inside of the other glass plate carries the transparent counterelectrode. Compared with the size of the pixel electrode, the TFT is very small and has virtually no adverse effect on the image. This technology can also be extended to fully colour-compatible image displays, in which a mosaic of red, green and blue filters is arranged in such a manner that each filter element is located opposite a switchable pixel.

The TFT displays disclosed hitherto usually operate as TN cells with crossed polarizers in transmitted light and are illuminated from the back.

The term MLC display here covers any matrix display containing integrated nonlinear elements, i.e. in addition to the active matrix, also displays containing passive elements such as varistors or diodes (MIM = metal-insulator-metal).

MLC displays of this type are particularly suitable for TV applications (for example pocket TV sets) or for high-information displays in automobile or aircraft construction. In addition to problems with respect to the angle dependence of the contrast and the response times, difficulties occur in MLC displays due to inadequate resistivity of the liquid-crystal mixtures [TOGASHI, S., SEKIGUCHI, K., TANABE, H., YAMAMOTO, E., SORI-MACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Addressing of Television Liquid Crystal Displays, p. 145 ff, Paris]. As the resistance decreases, the contrast of an MLC display worsens. Since the resistivity of the liquid-crystal mixture generally decreases over the life of an MLC display due to interaction with the internal surfaces of the display, a high (initial) resistance is very important for displays which must have acceptable resistance values over a long operating period.

The disadvantage of the MLC-TN displays disclosed hitherto is due to their comparatively low contrast, the relatively high viewing angle dependence and the difficulty of producing grey shades in these displays.

EP 1 061 113 A1 discloses a liquid crystalline medium based on a mixture of polar compounds having positive dielectric anisotropy that medium comprises, besides further different compounds, one or more compounds of the formula: 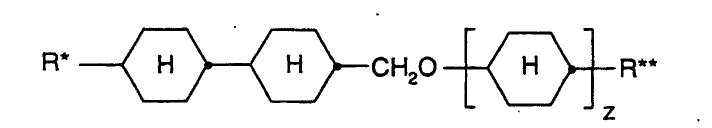 in which Z is 1 or 2 and R* and R** are independently of each other alkyl or alkenyl radicals with up to 12 carbon atoms said radicals being unsubstituted or mono-substituted by CN or CF₃ or at least mono-substituted by halogen. This document does not disclose any liquid crystalline medium based on a mixture of polar compounds having negative dielectric anisotropy.

EP 0 474 062 discloses MLC displays based on the ECB effect. The LC mixtures described therein are based on 2,3-difluorophenyl derivatives containing an ester, ether or ethyl bridge and have low values for the "voltage holding ratio" (HR) after exposure to UV and therefore cannot be used for displays of the projection type.

Thus, there continues to be a great demand for MLC displays having very high resistivity at the same time as a wide operating temperature range, short response times and low threshold voltage, with the aid of which various grey shades can be produced.

The invention has the object of providing MLC displays based on the ECB and VA effect which do not have the abovementioned disadvantages, or do so only to a reduced extent, and at the same time have very high resistivities.

It has now been found that this object can be achieved if nematic liquid-crystal mixtures according to the present invention are used in these display elements.

The invention thus relates to a liquid-crystalline medium based on a mixture of polar compounds having negative dielectric anisotropy, which contains at least one compound of formula I 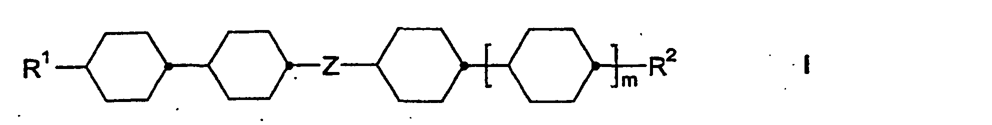 wherein
- R¹ and R²: are independently of each other an alkyl, alkoxy or alkeriyl group with 1 to 12 C atoms, it also being possible for one or more CH₂ groups in these radicals to be replaced, in each case independently of one another, by -O-, -CH=CH-, -CO-, -OCO- or -COO- in such a manner that oxygen atoms are not linked directly to one another,
- Z: is OCH₂ or CH₂O, and
- m: is 0 or 1.

Especially preferred are compounds of formula I wherein m is 0 and Z is CH₂O. Further preferred are compounds of formula I wherein R¹ and R² are alkyl or alkoxy, in particular alkyl, with 1 to 6 C atoms.

Preferred embodiments are:
a) A medium which optionally contains additionally one or more compounds of the formula III: and additionally contains one or more compounds of the formula II: 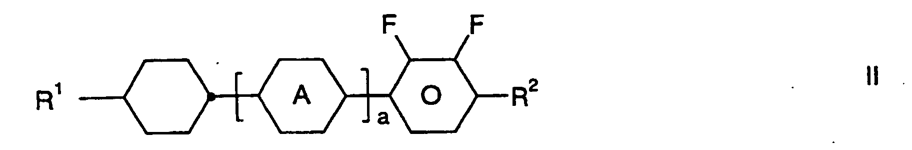 wherein
   - R¹ and R²: have independently of each other one of the meanings of formula I, 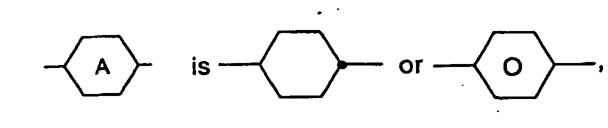 and
   - a: is 0 or 1. 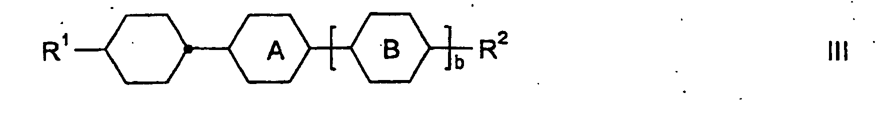
   wherein
   - R¹ and R²: have independently of each other one of the meanings of formula I, 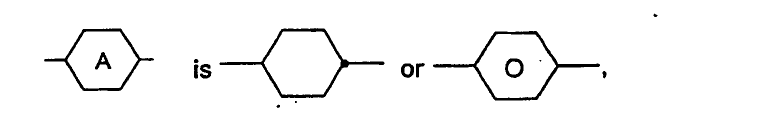 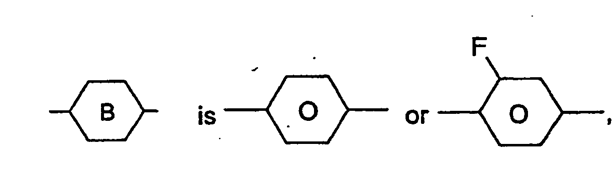 and
   - b: is 0 or 1.
b) A medium which optionally contains additionally one or more compounds of the formula IV: 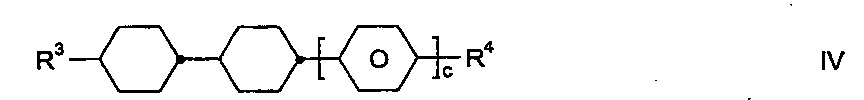 wherein
   - R³: is an alkenyl group with 2 to 7 C atoms,
   - R⁴: has one of the meanings of R¹ in formula I, and
   - c: is 0 or 1.
c) A medium which essentially comprises 4 or more compounds selected from the formulae I and II, at least 1 compound of the formula III and/or at least 1 compound of the formula IV.
d) A medium containing at least 3 compounds of the formula II.
e) A medium in which the proportion of compounds of the formula I in the mixture as a whole is from 2 to 30 %, preferably from 3 to 20 % by weight.
f) A medium in which the proportion of compounds of the formula II in the mixture as a whole is at least 40 % by weight.
g) A medium which contains at least three compounds selected from the formulae IIa to IIe 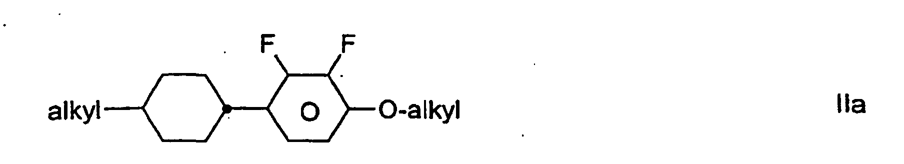 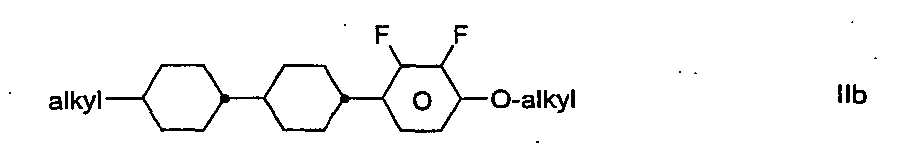 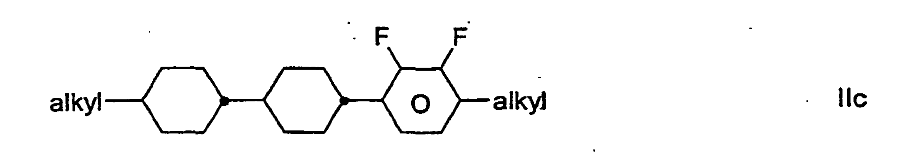 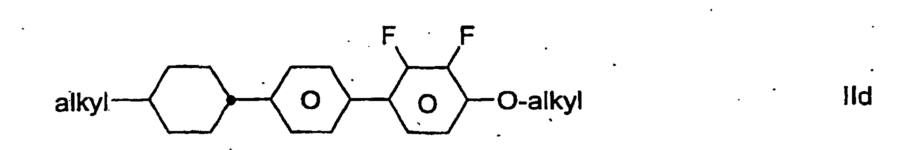 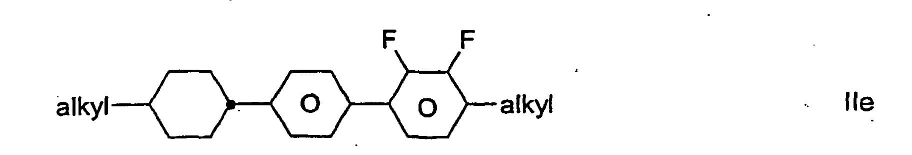 wherein alkyl is C₁₋₆-alkyl, in particular containing at least 1
   compound of the formula IIa, at least 1 compound of the formula IIb, and/or at least 1 compound of the formula llc.
h) A medium which contains at least one compound selected from the formulae IIIa to IIId 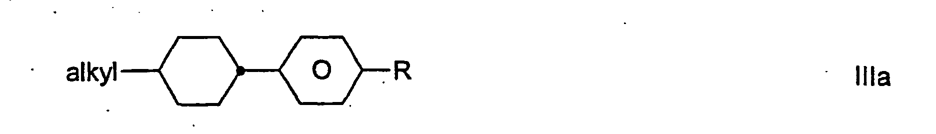 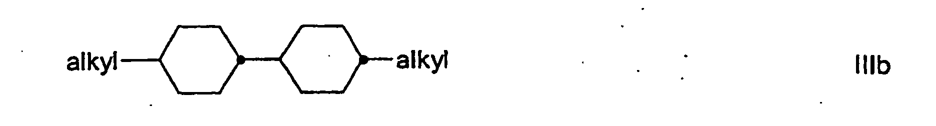 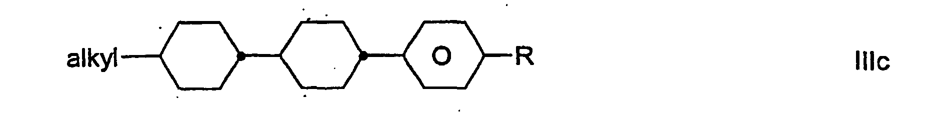 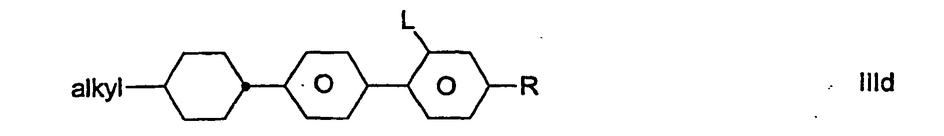 wherein alkyl is C₁₋₆-alkyl, R is C₁₋₆-alkyl or -alkoxy and L is H or F.
i) A medium which contains at least one compound selected from the formulae IVa to IVg 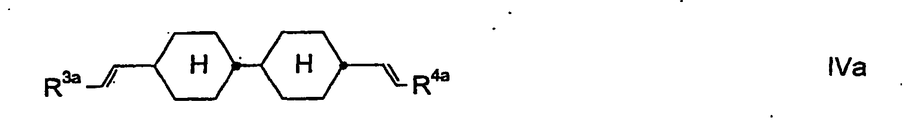 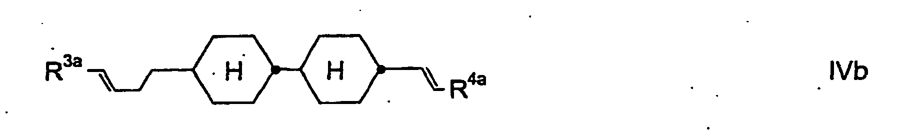 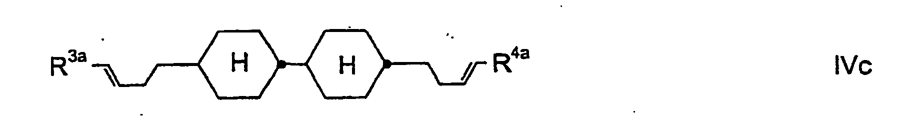 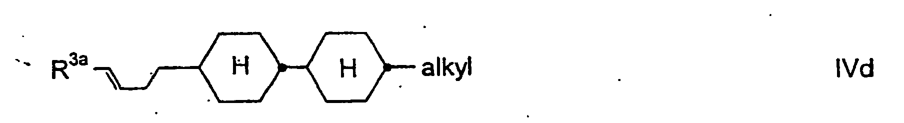 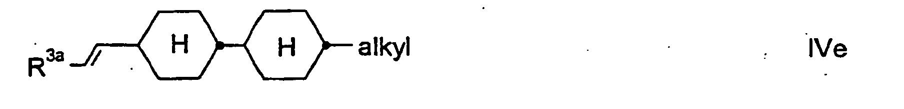 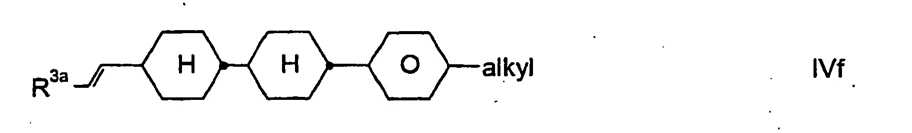 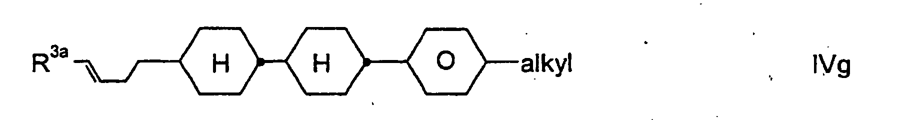 wherein R^{3a} and R^{4a} are independently of each other H, CH₃, C₂H₅ or n-C₃H₇ and alkyl is C₁₋₆-alkyl.
j) A medium which essentially comprises:
   2-30 % by weight of one or more compounds of the formula I,
   40-85 % by weight of one or more compounds of the formula II,
   2-25 % by weight of one or more compounds of the formula III, and
   2-25 % by weight of one or more compounds of the formula IV.
k) A medium which optionally contains additionally one or more compounds selected from the formulae Va to Vd 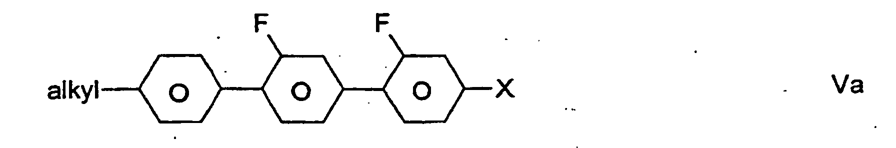 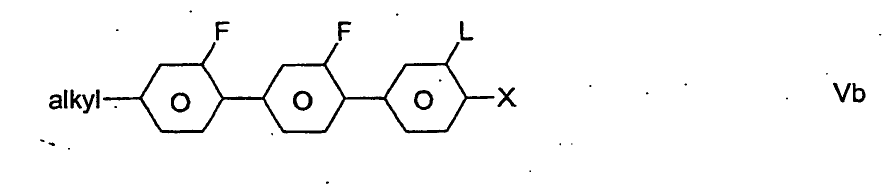 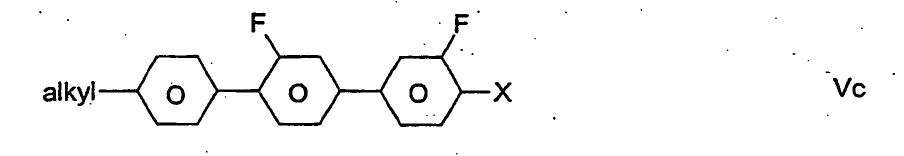 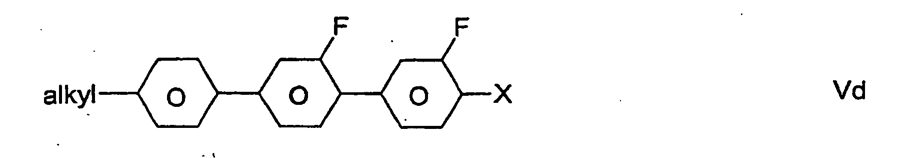 wherein alkyl is C₁₋₆-alkyl, L is H or F and X is F or Cl, in particular containing at least one compound of formula Va and/or at least one compound of formula Vb wherein X is preferably Cl and L is preferably H.
l) A medium which optionally contains additionally one or more compounds selected from the formulae VIa and VId 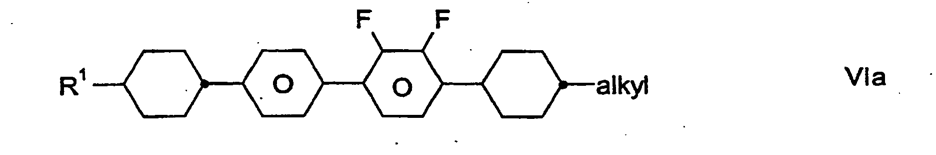 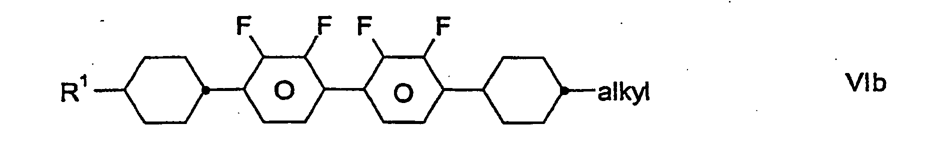 wherein R¹ has one of the meanings of formula I and alkyl is C₁₋₆-alkyl.
m) A medium which optionally contains additionally one or more two-ring compounds selected from the formulae VIIa to VIIe 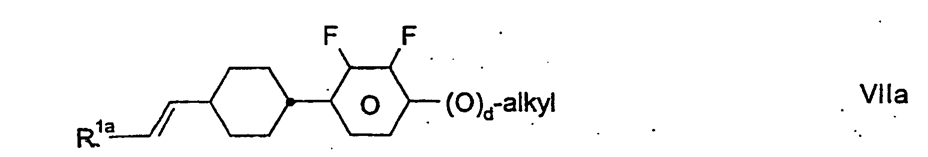 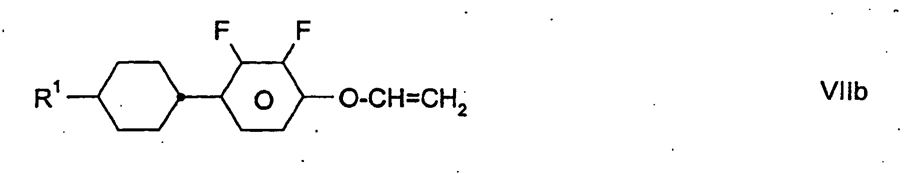 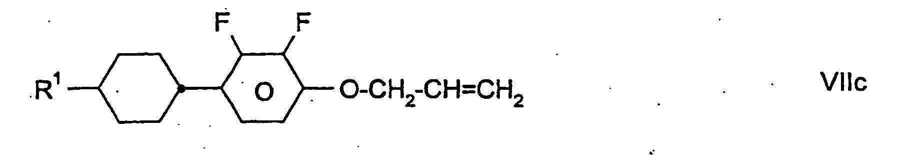 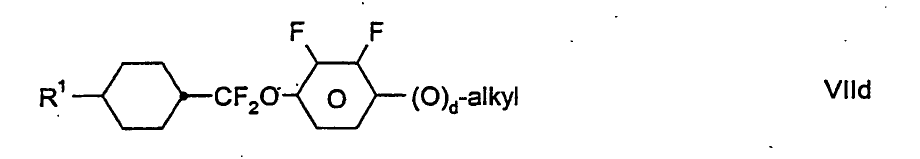 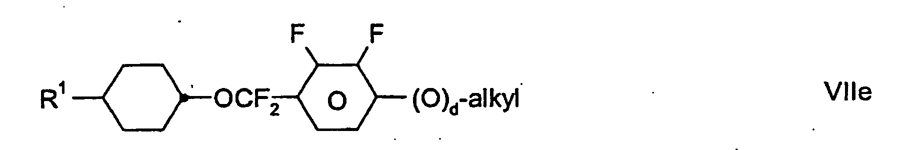 wherein R¹ has one of the meanings of formula I, R^{1a} is H, CH₃, C₂H₅ or n-C₃H₇, d is 0 or 1, and alkyl is C₁₋₆-alkyl. In these compounds, R¹ is preferably C₁₋₆-alkyl or -alkoxy and d is preferably 1. Especially preferred are compounds of formula Vlla, Vlld and Vlle.
n) A medium which optionally contains additionally one or more three-ring compounds selected from the formulae VIIIa to VIIIo 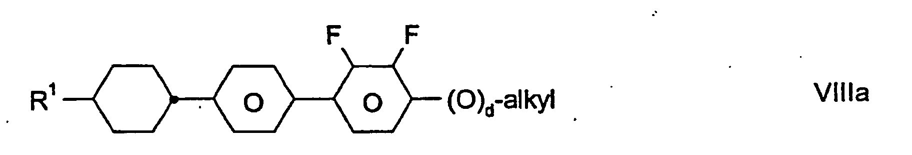 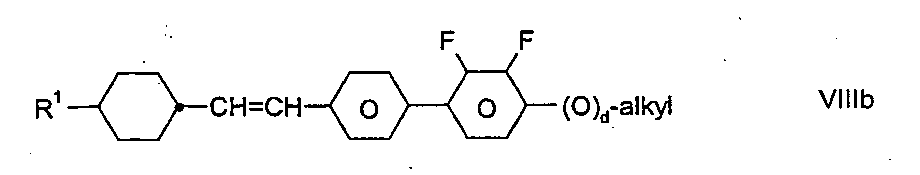 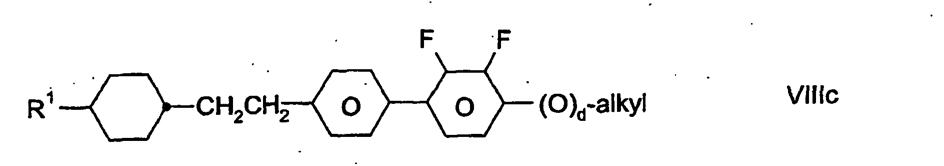 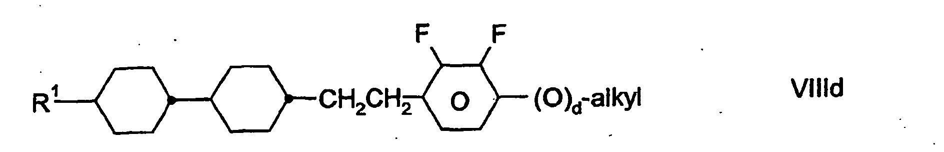 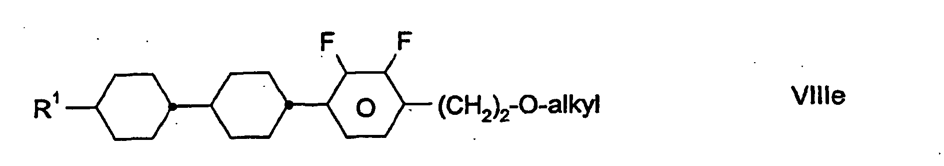 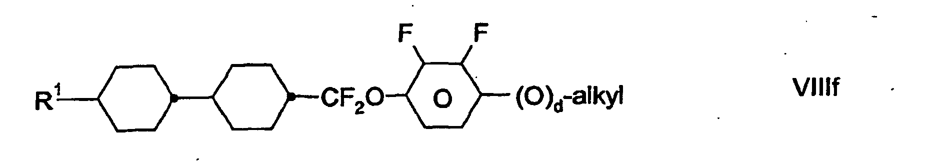 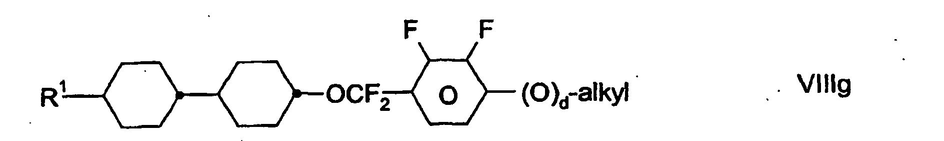 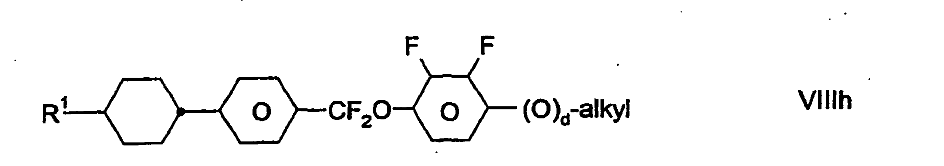 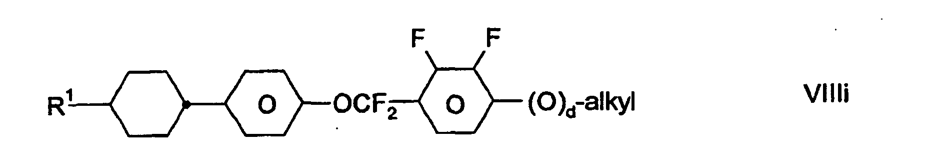 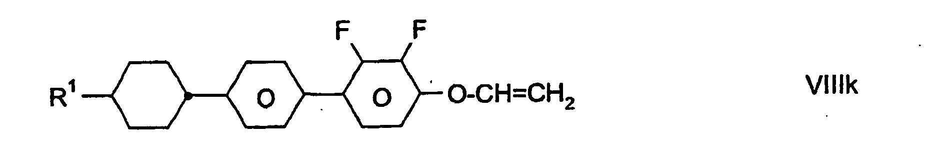 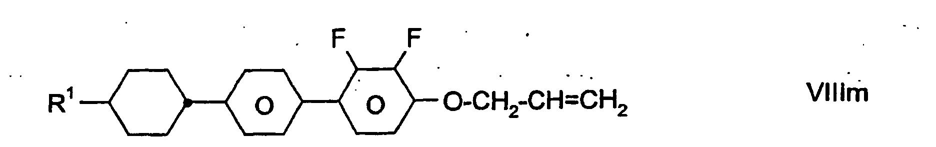 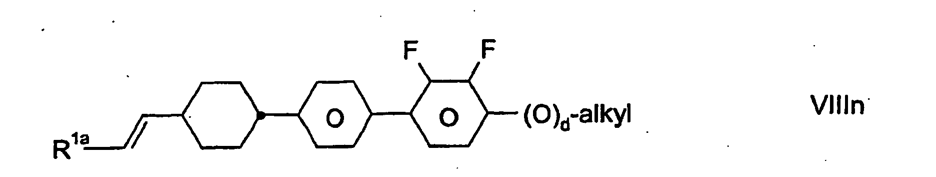 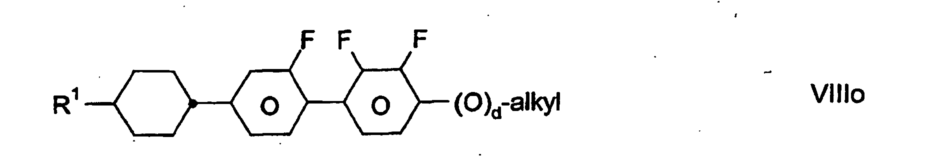 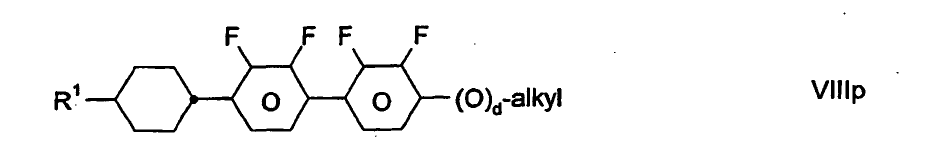 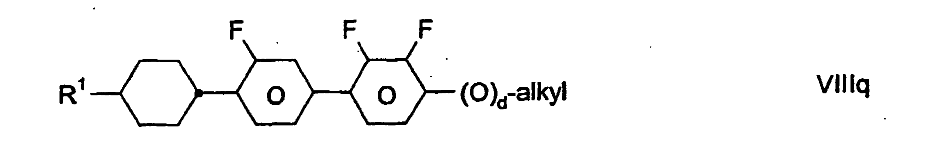 wherein R¹ has one of the meanings of formula I, R^{1a} is H, CH₃, C₂H₅ or n-C₃H₇, d is 0 or 1, and alkyl is C₁₋₆-alkyl. In these compounds, R¹ is preferably C₁₋₆-alkyl or -alkoxy and d is preferably 1. Especially preferred are compounds of formula VIIIa, Vllld, Vlllf and Vlllg.

The invention furthermore relates to an electro-optical display having active matrix addressing based on the ECB or VA effect, characterized in that it contains, as dielectric, a liquid-crystalline medium as described above.

The invention furthermore relates to an electro-optical display with active-matrix addressing, in which the liquid crystal layer has a homeotropic or tilted homeotropic orientation in the switched-off state and which contains a liquid-crystalline medium as described above.

The liquid-crystal mixture preferably has a nematic phase range of at least 80 K, a clearing point above 60 °C, in particular above 70 °C, and a maximum flow viscosity of 30 mm²s⁻¹ at 20 °C.

The liquid-crystal mixture according to the invention has a Δε of from about -1.5 to -8, in particular from about -3.0 to -5.0, where Δε denotes the dielectric anisotropy. The rotational viscosity γ₁ is preferably < 225 mPa·s, in particular < 180 mPa·s.

The birefringence Δn in the liquid-crystal mixture is generally between 0.04 and 0.15, preferably between 0.06 and 0.12. The dielectric constant ε_{_{∥}} is ≥ 3, preferably from 3.2 to 8.5.

The liquid-crystal mixture may also contain further additives known to the person skilled in the art and described in the literature. For example, 0-15 % of pleochroic dyes can be added, furthermore conductive salts, preferably ethyldimethyldodecylammonium 4-hexoxybenzoate, tetrabutylammonium tetraphenylborate or complex salts of crown ethers (cf. for example, Haller et al., Mol. Cryst. Liq. Cryst. Volume 24, pages 249-258 (1973)) in order to improve the conductivity or substances can be added in order to modify the dielectric anisotropy, the viscosity and/or the alignment of the nematic phases. Such substances are described, for example, in DE-A 22 09 127, 22 40 864, 23 21 632, 23 38 281, 24 50 088, 26 37 430 and 28 53 728. The liquid-crystal mixture may also contain UV stabilizers and antioxidants.

The individual components of the formulae I to VIII of the liquid-crystal phases according to the invention are either known or their methods of preparation can easily be derived from the prior art by a person skilled in the relevant art, since they are based on standard methods described in the literature.

The term "alkenyl" in formula I to IV comprises straight chain and branched alkenyl groups with 2 to 7 C atoms. Straight chain alkenyl groups are preferred. Further preferred alkenyl groups are C₂-C₇-1E-alkenyl, C₄-C₇-3E-alkenyl, C₅-C₇-4-alkenyl, C₆-C₇-5-alkenyl and C₇-6-alkenyl, in particular C₂-C₇-1E-alkenyl, C₄-C₇-3E-alkenyl and C₅-C₇-4-alkenyl.

Of these, especially preferred alkenyl groups are vinyl, 1E-propenyl, 1 E-butenyl, 1E-pentenyl, 1E-hexenyl, 1E-heptenyl, 3-butenyl, 3E-pentenyl, 3E-hexenyl, 3E-heptenyl, 4-pentenyl, 4Z,hexenyl, 4E-hexenyl, 4Z-heptenyl, 5-hexenyl and 6-heptenyl. Alkenyl groups with up to 5 C atoms are particularly preferred.

The mixtures preferably contain 4 to 20, in particular 5 to 15, compounds of the formulae I, II, III and IV.

In addition to compounds of the formulae I to IV, other constituents may also be present, for example in an amount of up to 45 % of the mixture as a whole, but preferably up to 35 %, in particular up to 10 %.

The other constituents are preferably selected from nematic or nematogenic substances, in particular known substances, from the classes consisting of the azoxybenzenes, benzylideneanilines, biphenyls, terphenyls, phenyl or cyclohexyl benzoates, phenyl or cyclohexyl cyclohexanecarboxylates, phenylcyclohexanes, cyclohexylbiphenyls, cyclohexylcyclohexanes, cyclo-hexylnaphthalenes, 1,4-bis-cyclohexylbiphenyls or cyclohexylpyrimidines, phenyl- or cyclohexyldioxanes, optionally halogenated stilbenes, benzyl phenyl ethers, tolans and substituted cinnamic acids.

The most important compounds which are suitable as components of liquid-crystalline phases of this type can be characterized by the formula IV

R⁵-L-G-E-R⁶ IV

in which L and E are each a carbocyclic or heterocyclic ring system from the group comprising 1,4-disubstituted benzene and cyclohexane rings, 4,4'-disubstituted biphenyl, phenylcyclohexane and cyclohexylcyclohexane systems, 2,5-disubstituted pyrimidine and 1,3-dioxane rings, 2,6-disubstituted naphthalene, di- and tetrahydronaphthalene, quinazoline and tetrahydroquinazoline,
G is

| | |
|---|---|
| -CH=CH- | -N(O)=N- |
| -CH-CQ- | -CH=N(O)- |
| -C≡C- | -CH₂-CH₂- |
| -CO-O- | -CH₂-O- |
| -CO-S- | -CH₂-S- |
| -CH=N- | -COO-Phe-COO- |

or a C-C single bond, Q is halogen, preferably chlorine, or -CN, and R⁵ and R⁶ are each alkyl, alkoxy, alkanoyloxy or alkoxycarbonyloxy having up to 18, preferably up to 8 carbon atoms, or one of these radicals is alternatively CN, NC, NO₂, CF₃, F, Cl or Br.

In most of these compounds R⁵ and R⁶ are different from one another, one of these radicals usually being an alkyl or alkoxy group. Other variants of the proposed substituents are also common. Many such substances or mixtures thereof are commercially available. All these substances can be prepared by methods which are known from the literature.

The structure of the liquid-crystal displays according to the invention corresponds to the conventional geometry, as described, for example, in EP-A 0 240 379.

The examples below are intended to illustrate the invention without representing a limitation. Above and below, percentages are by weight; all temperatures are given in degrees celsius.

The following abbreviations are used:

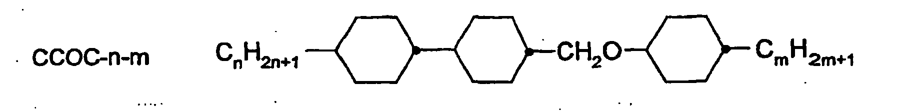

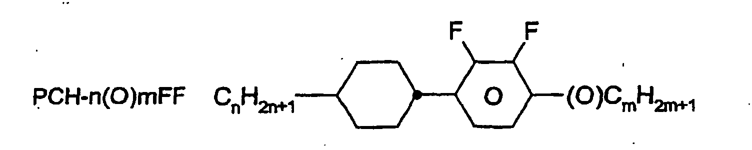

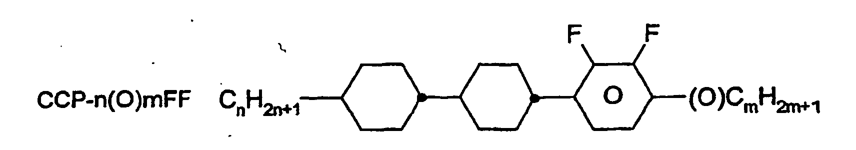

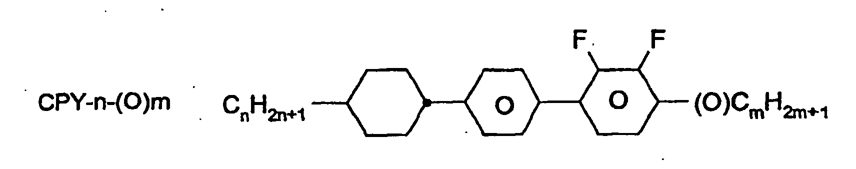

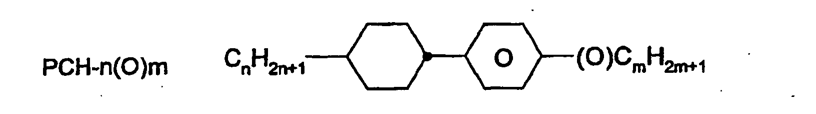

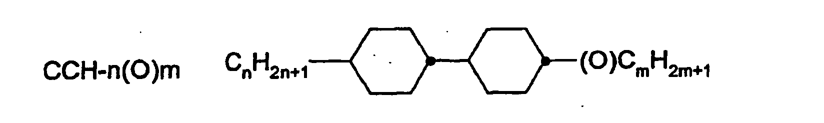

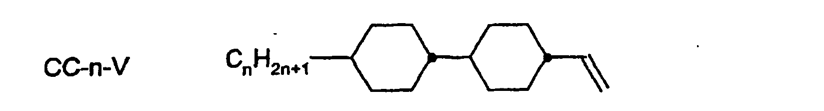

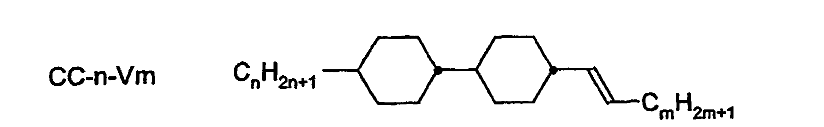

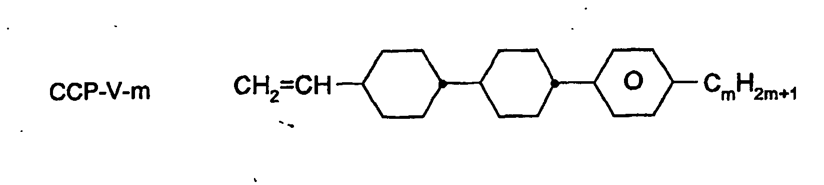

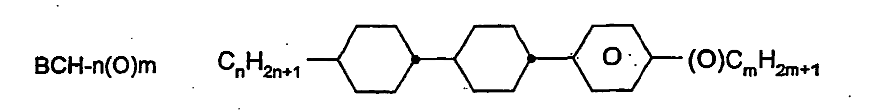

In addition:

| | |
|---|---|
| Δn | denotes the optical anisotropy measured at 20 °C and 589 nm, |
| nₑ | denotes the extraordinary refractive index at 20 °C and 589 nm, |
| Δε | denotes the dielectric anisotropy at 20 °C, |
| ε_{∥} | denotes the dielectric constant in the parallel direction to the molecular axis, |
| cp | denotes the clearing point [°C], |
| T(S,N) | denotes the temperature of the transition of the smectic to the nematic phase [°C], |
| ν_{T} | denote the viscosity at the temperature T given in °C [mm² s⁻¹ ], |
| γ₁ | denotes the rotational viscosity measured at 20 °C [mPa s], |
| kᵢ | denote the respective elastic constant measured at 20 °C [pN], |
| kᵢ/kⱼ | denote the ratio of the respective elastic constants measured at 20 °C and |
| V₀ | denotes the capacitive threshold, also called fredercksz threshold measured at 20 °C. |

The display used for measurement of the threshold voltage has two plane-parallel outer plates at a separation of 5 µm and, on the inside of the outer plates, electrode layers with lecithin alignment layers on top which cause a homeotropic alignment of the liquid crystals.

### Example 1

A liquid-crystalline mixture comprising

| | | | |
|---|---|---|---|
| PCH-502FF | 12.0 % | cp | 79°C |
| PCH-302FF | 12.0 % | Δn | 0.0781 |
| PCH-504FF | 11.0 % | nₑ | 1.5524 |
| CCP-302FF | 13.5 % | Δε | -3.8 |
| CCP-502FF | 11.5 % | ε_{∥} | 3.6 |
| CCP-21FF | 2.5 % | | |
| CCP-31FF | 2.5 % | | |
| CCH-35 | 8.0 % | | |
| CC-5-V | 7.0 % | | |
| CC-3-V1 | 6.0 % | | |
| CCP-V-1 | 3.0 % | | |
| CCH-501 | 6.0 % | | |
| CCOC-3-3 | 5.0 % | | |

### Example 2

A liquid-crystalline mixture comprising

| | | | |
|---|---|---|---|
| PCH-302FF | 16.0 % | cp | 71°C |
| PCH-304FF | 18.0 % | Δn | 0.0788 |
| PCH-502FF | 8.0 % | nₑ | 1.5516 |
| CCP-302FF | 14.0 % | Δε | -4.4 |
| CCP-502FF | 13.0 % | ε_{∥} | 3.8 |
| CC-3-V1 | 9.0 % | | |
| CC-5-V | 6.5 % | | |
| CCH-35 | 10.0 % | | |
| CCOC-3-3 | 4.0 % | | |
| CCH-501 | 1.5 % | | |

### Example 3

A liquid-crystalline mixture comprising

| | | | |
|---|---|---|---|
| PCH-302FF | 18.0 % | cp | 75°C |
| PCH-502FF | 10.0 % | Δn | 0.0789 |
| PCH-504FF | 17.0 % | nₑ | 1.5521 |
| CCP-302FF | 15.0 % | Δε | -4.6 |
| CCP-502FF | 14.0 % | ε_{∥} | 3.7 |
| CCH-35 | 11.0 % | | |
| CC-5-V | 4.0 % | | |
| CC-3-V1 | 5.0 % | | |
| CCOC-3-3 | 3.0 % | | |
| CCOC-4-3 | 3.0 % | | |

### Example 4

A liquid-crystalline mixture comprising

| | | | |
|---|---|---|---|
| PCH-304FF | 18.0 % | cp | 74°C |
| PCH-502FF | 12.0 % | Δn | 0.0816 |
| PCH-504FF | 18.0 % | nₑ | 1.5549 |
| CCP-302FF | 16.0 % | Δε | -4.7 |
| CCP-502FF | 10.0 % | ε_{∥} | 3.8 |
| CCH-35 | 7.0 % | | |
| CC-3-V1 | 8.0 % | | |
| CCP-V-1 | 3.0 % | | |
| CCOC-3-3 | 4.0 % | | |
| CCOC-4-3 | 4.0 % | | |

### Example 5

A liquid-crystalline mixture comprising

| | | | |
|---|---|---|---|
| PCH-302FF | 18.0 % | cp | 75°C |
| PCH-304FF | 2.0 % | Δn | 0.0798 |
| PCH-502FF | 18.0 % | nₑ | 1.5534 |
| CCP-302FF | 16.0 % | Δε | -4.5 |
| CCP-502FF | 15.0 % | ε_{∥} | 3.8 |
| CCH-35 | 3.5 % | | |
| CCH-303 | 5.0 % | | |
| CCH-501 | 8.0 % | | |
| CCOC-3-3 | 3.0 % | | |
| CC-5-V | 3.0 % | | |
| CC-3-V1 | 8.5 % | | |

### Example 6

A liquid-crystalline mixture comprising

| | | | |
|---|---|---|---|
| PCH-304FF | 8.0 % | cp | 75°C |
| PCH-502FF | 20.0 % | Δn | 0.0779 |
| PCH-504FF | 15.0 % | nₑ | 1.5511 |
| CCP-302FF | 20.0 % | Δε | -4.5 |
| CCP-502FF | 8.0 % | ε_{∥} | 3.7 |
| CCH-35 | 13.0 % | | |
| CCH-501 | 6.0 % | | |
| CC-3-V1 | 5.0 % | | |
| CCOC-3-3 | 3.0 % | | |
| CCOC-4-3 | 2.0 % | | |

### Example 7

A liquid-crystalline mixture comprising

| | | | |
|---|---|---|---|
| PCH-304FF | 17.0 % | cp | 70°C |
| PCH-502FF | 17.0 % | Δn | 0.0825 |
| PCH-504FF | 16.0 % | nₑ | 1.5557 |
| CCP-302FF | 12.0 % | Δε | -4.9 |
| CCP-502FF | 10.0 % | ε_{∥} | 4.0 |
| CPY-2-O2 | 5.0 % | | |
| CC-3-V1 | 3.0 % | | |
| CCH-35 | 12.0 % | | |
| CCOC-3-3 | 4.0 % | | |
| CCOC-4-3 | 4.0 % | | |

### Example 8

A liquid-crystalline mixture comprising

| | | | |
|---|---|---|---|
| PCH-302FF | 20.0 % | cp | 74°C |
| PCH-304FF | 1.5 % | Δn | 0.0793 |
| PCH-502FF | 19.0 % | nₑ | 1.5517 |
| CCP-302FF | 14.0 % | Δε | -4.4 |
| CCP-502FF | 14.0 % | ε_{∥} | 3.8 |
| CCH-35 | 7.0 % | | |
| CCH-303 | 6.0 % | | |
| CCH-501 | 3.0 % | | |
| CCOC-3-3 | 3.5 % | | |
| CCOC-4-3 | 1.5 % | | |
| CC-5-V | 4.0 % | | |
| CC-3-V1 | 6.5 % | | |

### Example 9

A liquid-crystalline mixture comprising

| | | | |
|---|---|---|---|
| PCH-302FF | 16.0 % | cp | 75°C |
| PCH-304FF | 10.0 % | Δn | 0.0779 |
| PCH-502FF | 15.0 % | nₑ | 1.5519 |
| CCP-302FF | 12.0 % | Δε | -4.3 |
| CCP-502FF | 11.0 % | ε_{∥} | 3.8 |
| CCP-21FF | 6.0 % | γ₁ | 155 mPa s |
| CCH-35 | 11.0 % | k₁ | 13.2 pN |
| CC-5-V | 9.0 % | k₃/k₁ | 1.15 |
| CCOC-3-3 | 5.0 % | V₀ | 1.99V |
| CCOC-4-3 | 5.0 % | | |

### Example 10

A liquid-crystalline mixture comprising

| | | | |
|---|---|---|---|
| PCH-304FF | 14.75 % | cp | 75°C |
| PCH-502FF | 20.0 % | Δn | 0.0833 |
| CCP-302FF | 12.5 % | nₑ | 1.5584 |
| CCP-502FF | 5.5 % | Δε | -3.7 |
| CPY-2-O2 | 8.75 % | ε_{∥} | 3.5 |
| CPY-3-O2 | 1.75 % | γ₁ | 127 mPa s |
| CCH-35 | 13.0 % | k₁ | 14.0 pN |
| CC-5-V | 13.0 % | k₃/k₁ | 1.09 |
| CC-3-V1 | 7.25 % | V₀ | 2.13 V |
| CCOC-3-3 | 3.5 % | | |

### Example 11

A liquid-crystalline mixture comprising

| | | | |
|---|---|---|---|
| PCH-302FF | 16.0 % | cp | 76°C |
| PCH-304FF | 15.0 % | Δn | 0.0830 |
| PCH-502FF | 15.0 % | nₑ | 1.5586 |
| CCP-302FF | 11.0 % | Δε | -4.9 |
| CCP-502FF | 11.0 % | ε_{∥} | 3.9 |
| CCH-35 | 10.0 % | γ₁ | 180 mPa s |
| CCP-21FF | 7.0 % | k₁ | 12.8 pN |
| CCV-V-1 | 5.0 % | k₃/k₁ | 1.22 |
| CCOC-3-3 | 5.0 % | V₀ | 1.90 V |
| CCOC-4-3 | 5.0 % | | |

### Example 12

A liquid-crystalline mixture comprising

| | | | |
|---|---|---|---|
| PCH-302FF | 20.0 % | cp | 75°C |
| PCH-304FF | 6.0 % | Δn | 0.0826 |
| PCH-502FF | 10.0 % | nₑ | 1.5576 |
| CCP-302FF | 13.0 % | Δε | -3.9 |
| CCP-502FF | 8.5 % | ε_{∥} | 3.6 |
| CPY-2-O2 | 3.0 % | γ₁ | 125 mPa s |
| CPY-3-O2 | 2.5 % | k₁ | 13.8 pN |
| CC-5-V | 17.5 % | k₃/k₁ | 1.17 |
| CC-3-V1 | 13.0 % | V₀ | 2.15 V |
| CCOC-3-3 | 4.5 % | | |
| CCOC-4-3 | 2.0 % | | |

### Example 13

A liquid-crystalline mixture comprising

| | | | |
|---|---|---|---|
| PCH-302FF | 20.0 % | cp | 75°C |
| PCH-502FF | 12.0 % | Δn | 0.0821 |
| CCP-302FF | 13.0 % | nₑ | 1.5574 |
| CCP-502FF | 10.0 % | Δε | -3.8 |
| CPY-2-O2 | 9.0 % | ε_{∥} | 3.7 |
| CC-3-V | 19.5 % | γ₁ | 116 mPa s |
| CCH-34 | 11.5 % | k₁ | 13.2 pN |
| CCOC-3-3 | 5.0 % | k₃/k₁ | 1.14 |
| | | V₀ | 2.06V |

### Example 14

A liquid-crystalline mixture comprising

| | | | |
|---|---|---|---|
| PCH-302FF | 16.0 % | cp | 72.5°C |
| PCH-304FF | 11.0 % | Δn | 0.0808 |
| PCH-502FF | 7.0 % | nₑ | 1.5564 |
| CCP-303FF | 12.0 % | Δε | -3.6 |
| CCP-402FF | 7.0 % | ε_{∥} | 3.6 |
| CPY-2-O2 | 9.0 % | γ₁ | 113 mPa s |
| CCH-34 | 7.0 % | k₁ | 13.6 pN |
| CCH-35 | 7.0 % | k₃/k₁ | 1.01 |
| CC-5-V | 10.0 % | V₀ | 2.06 V |
| CC-3-V1 | 11.0 % | | |
| CCOC-3-3 | 3.0 % | | |

### Example 15

A liquid-crystalline mixture comprising

| | | | |
|---|---|---|---|
| PCH-502FF | 12.0 % | cp | 86°C |
| PCH-504FF | 14.0 % | Δn | 0.1000 |
| CCP-104FF | 12.0 % | nₑ | 1.5795 |
| CPY-2-O2 | 13.0 % | Δε | -3.8 |
| CPY-3-O2 | 13.0 % | ε_{∥} | 3.5 |
| CCOC-3-3 | 3.0 % | γ₁ | 171 mPa s |
| CCOC-4-3 | 3.0 % | k₁ | 16.4 pN |
| CC-3-V1 | 14.0 % | k₃/k₁ | 0.99 |
| CC-5-V | 8.0 % | V₀ | 2.18V |
| CCH-35 | 6.0 % | | |
| BCH-32 | 2.0 % | | |

### Example16

A liquid-crystalline mixture comprising

| | | | |
|---|---|---|---|
| PCH-304FF | 4.0 % | cp | 86.5°C |
| PCH-502FF | 12.0 % | T(S,N) | <-30°C |
| PCH-504FF | 9.0 % | Δn | 0.1000 |
| CCP-102FF | 12.0 % | nₑ | 1.5796 |
| CPY-2-O2 | 13.0 % | Δε | -3.8 |
| CPY-3-O2 | 13.0 % | ε_{∥} | 3.5 |
| CCOC-3-3 | 3.0 % | γ₁ | 164 mPa s |
| CCOC-4-3 | 3.0 % | k₁ | 16.2 pN |
| CC-3-V1 | 11.0 % | k₃/k₁ | 1.03 |
| CC-5-V | 12.0 % | V₀ | 2.02 V |
| CCH-35 | 6.0 % | | |
| BCH-32 | 2.0 % | | |

### Example 17

A liquid-crystalline mixture comprising

| | | | |
|---|---|---|---|
| PCH-304FF | 13.0 % | cp | 86°C |
| PCH-502FF | 12.0 % | T(S,N) | <-30°C |
| PCH-504FF | 2.0 % | Δn | 0.0994 |
| CCP-302FF | 12.0 % | nₑ | 1.5786 |
| CPY-2-O2 | 13.0 % | Δε | -3.9 |
| CPY-3-O2 | 13.0 % | ε_{∥} | 3.5 |
| CCOC-3-3 | 3.0 % | γ₁ | 156 mPa s |
| CCOC-4-3 | 2.0 % | k₁ | 15.4 pN |
| CC-3-V1 | 15.0 % | k₃/k₁ | 1.09 |
| CC-5-V | 15.0 % | V₀ | 2.20 V |

### Example 18

| | | | |
|---|---|---|---|
| PCH-304FF | 17.0 % | cp | 75.5°C |
| PCH-502FF | 10.0 % | Δn | 0.0790 |
| PCH-504FF | 12.0 % | nₑ | 1.5523 |
| CCP-302FF | 13.0 % | Δε | -4.5 |
| CCP-502FF | 13.0 % | ε_{∥} | 3.8 |
| CCP-21FF | 5.0 % | γ₁ | 170 mPa s |
| CCH-35 | 10.0 % | k₁ | 13.2 pN |
| CC-5-V | 6.0 % | k₃/k₁ | 1.12 |
| CC-3-V1 | 2.0 % | V₀ | 1.91 V |
| CCOC-3-3 | 4.0 % | | |
| CCOC-4-3 | 3.0 % | | |

### Example 19

A liquid-crystalline mixture comprising

| | | | |
|---|---|---|---|
| PCH-304FF | 12.0 % | cp | 74.5°C |
| PCH-502FF | 12.0 % | Δn | 0.0814 |
| PCH-504FF | 18.0 % | k1nₑ | 1.5558 |
| CCP-303FF | 10.0 % | Δε | -4.2 |
| CCP-402FF | 10.0 % | ε_{∥} | 3.7 |
| CPY-2-O2 | 7.0 % | γ₁ | 161 mPa s |
| CCH-35 | 7.0 % | k₁ | 13.1 pN |
| CC-3-V1 | 11.0 % | k₃/k₁ | 1.01 |
| CC-5-V | 3.0 % | V₀ | 1.92V |
| CCOC-3-3 | 3.0 % | | |
| CCOC-3-5 | 3.0 % | | |
| CCOC-4-3 | 4.0 % | | |

## Claims

1. Liquid-crystalline medium based on a mixture of polar compounds having negative dielectric anisotropy, which contains at least one compound of formula I 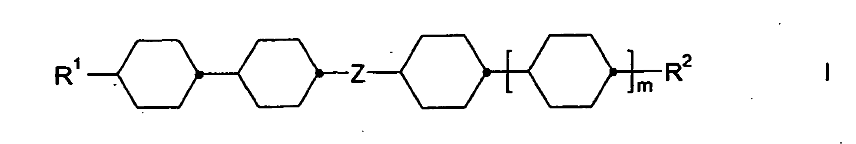 wherein
R¹ and R² are independently of each other an alkyl, alkoxy or alkenyl group with 1 to 12 C atoms, it also being possible for one or more CH₂ groups in these radicals to be replaced, in each case independently of one another, by -O-, -CH=CH-, -CO-, -OCO- or -COO- in such a manner that oxygen atoms are not linked directly to one another,
Z is OCH₂ or CH₂O, and
m is 0 or 1
and additionally contains one or more compounds of formula II 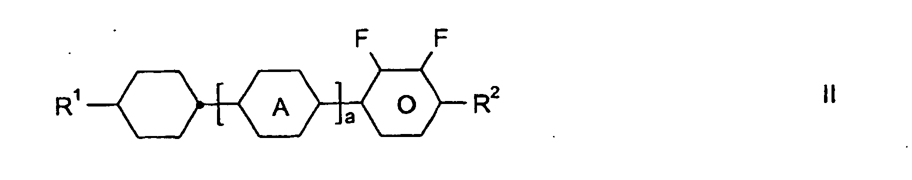 wherein
R¹ and R² have independently of each other one of the meanings of formula I, 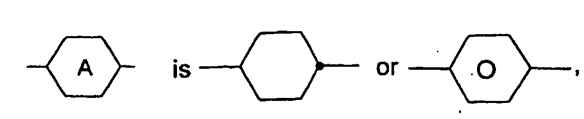 and
a is 0 or 1.

2. Medium according to claim 1, **characterized in that** it additionally contains at least one compound of formula III 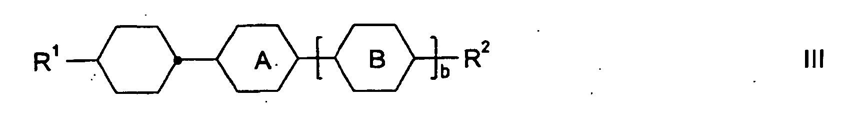 wherein
R¹ and R² have independently of each other one of the meanings of formula I, 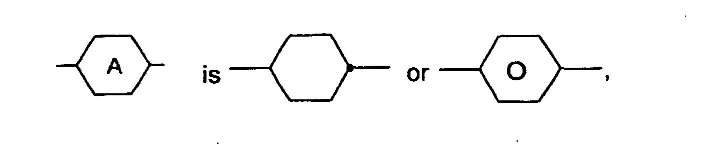 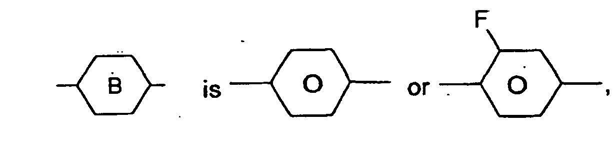 and
b is 0 or 1.

3. Medium according to at least one of claims 1 and 2, **characterized in that** it additionally contains one or more compounds of formula IV 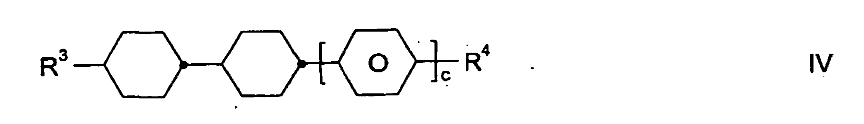 wherein
R³ is an alkenyl group with 2 to 7 C atoms,
R⁴ has one of the meanings of R¹ in formula I, and
c is 0 or 1.

4. Medium according to at least one of claims 1 to 3, **characterized in that** it essentially comprises 4 or more compounds selected from the formulae I and II, at least 1 compound of the formula III, and at least 1 compound of the formula IV

5. Medium according to at least one of claims 1 to 4, **characterized in that** it comprises at least one compound of formula I wherein m is 0 and Z is CH₂O.

6. Liquid-crystalline medium according to at least one one of claims 1 to 5, **characterized in that** it contains at least 3 compounds selected from the formulae IIa to IIe 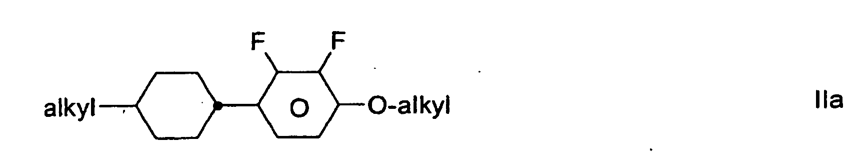 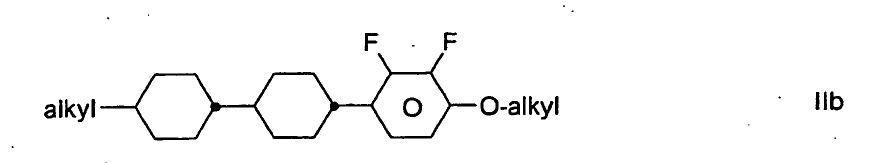 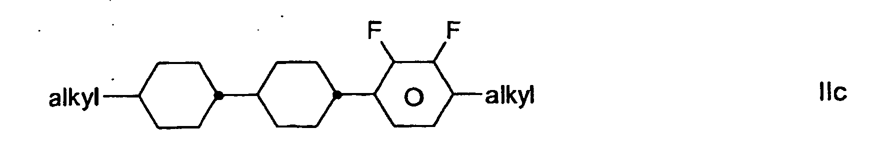 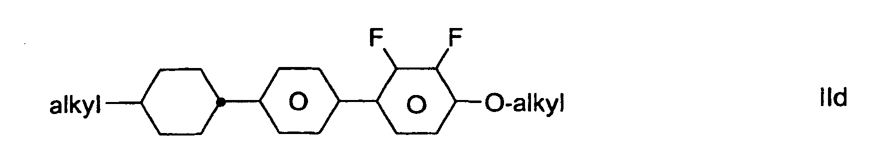 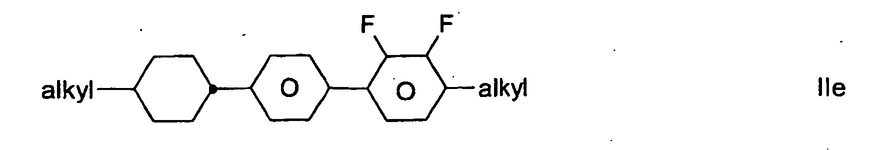 wherein alkyl is C₁₋₆-alkyl.

7. Liquid-crystalline medium according to at least one one of claims 1 to 6, **characterized in that** it contains at least one compound selected from the formulae IIIa to IIId 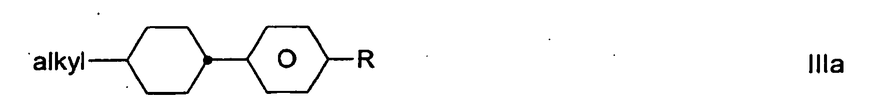 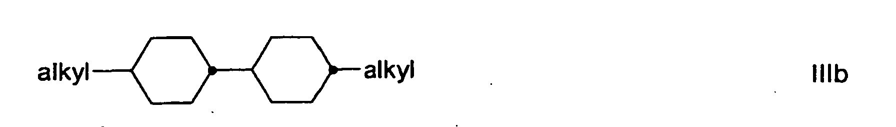 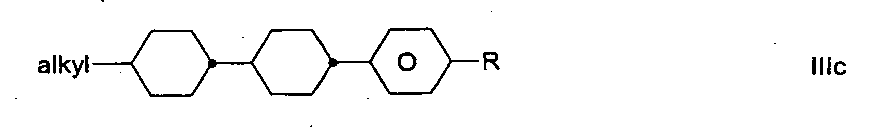 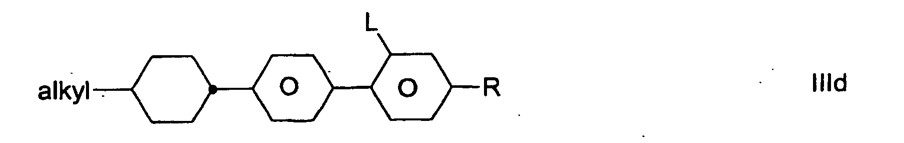 wherein alkyl is C₁₋₆-alkyl, R is C₁₋₆-alkyl or -alkoxy and L is H or F.

8. Liquid-crystalline medium according to at least one one of claims 1 to 7, **characterized in that** it contains at least one compound selected from the formulae IVa to IVg 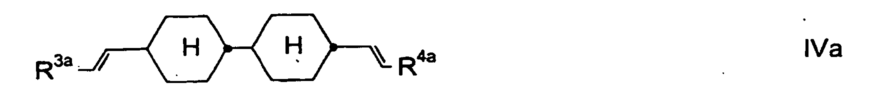 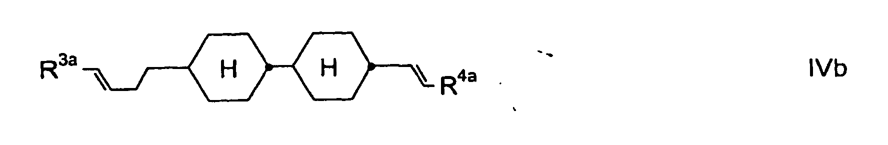 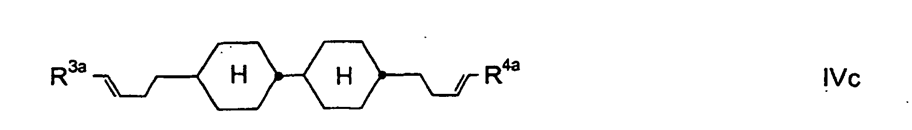 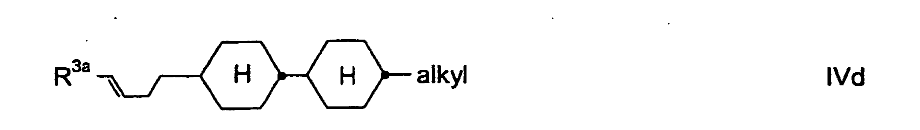 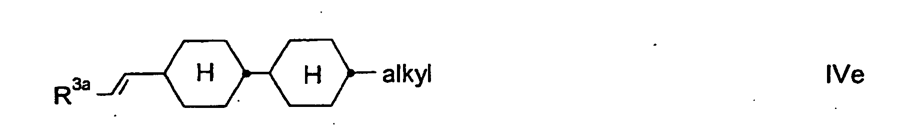 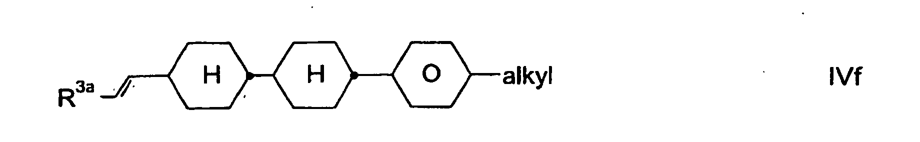 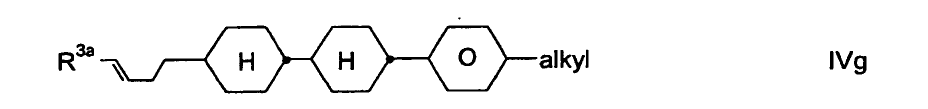 wherein R^{3a} and R^{4a} are independently of each other H, CH₃, C₂H₅ or n-C₃H₇ and alkyl is C₁₋₆-alkyl.

9. Liquid-crystalline medium according to one of claims 1 to 8, **characterized in that** it essentially comprises
2-30 % by weight of one or more compounds of the formula I,
40-85 % by weight of one or more compounds of the formula II,
2-25 % by weight of one or more compounds of the formula III, and
2-25 % by weight of one or more compounds of the formula IV.

10. Electro-optical display having active matrix addressing based on the VA or ECB effect, **characterized in that** it contains, as dielectric, a liquid-crystalline medium according to one of claims 1 to 9.

## Patentansprüche

1. Flüssigkristallines Medium auf der Basis eines Gemisches von polaren Verbindungen mit negativer dielektrischer Anisotropie, das mindestens eine Verbindung der Formel I 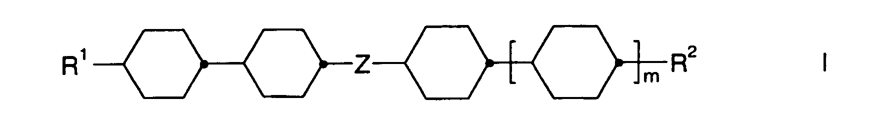 enthält, worin
R¹ und R² unabhängig voneinander eine Alkyl-, Alkoxy- oder Alkenylgruppe mit 1 bis 12 C-Atomen bedeuten, wobei in diesen Resten auch eine oder mehrere CH₂-Gruppen jeweils unabhängig voneinander durch -O-, -CH=CH-, -CO-, -OCO- oder -COO- so ersetzt sein können, dass Sauerstoffatome nicht direkt miteinander verknüpft sind,
Z OCH₂ oder CH₂O bedeutet und
m 0 oder 1 bedeutet,
und zusätzliche eine oder mehrere Verbindungen der Formel II 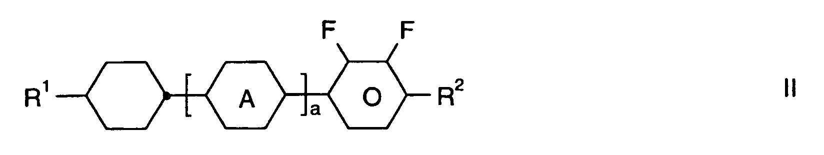 enthält, worin
R¹ und R² unabhängig voneinander eine der Bedeutungen der Formel I besitzen, 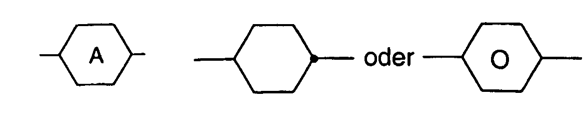 bedeutet und
a 0 oder 1 bedeutet.

2. Medium nach Anspruch 1, **dadurch gekennzeichnet, dass** es zusätzlich mindestens eine Verbindung der Formel III 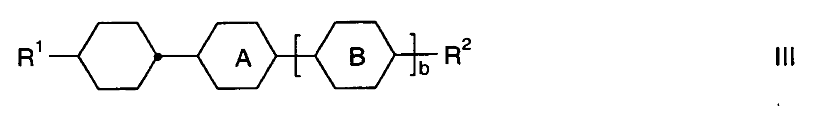 enthält, worin
R¹ und R² unabhängig voneinander eine der Bedeutungen der Formel I besitzen, 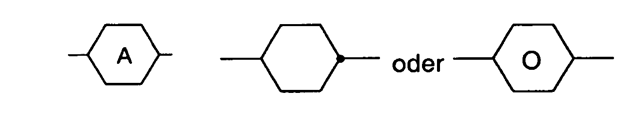 bedeutet, 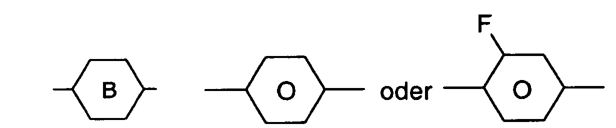 bedeutet und
b 0 oder 1 bedeutet.

3. Medium nach mindestens einem der Ansprüche 1 und 2, **dadurch gekennzeichnet, dass** es zusätzlich eine oder mehrere Verbindungen der Formel IV 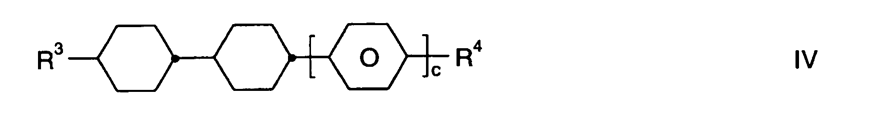 enthält, worin
R³ eine Alkenylgruppe mit 2 bis 7 C-Atomen bedeutet,
R⁴ eine der für R¹ in Formel I angegebenen Bedeutungen besitzt und
c 0 oder 1 bedeutet.

4. Medium nach mindestens einem der Ansprüche 1 bis 3, **dadurch gekennzeichnet, dass** es im Wesentlichen 4 oder mehr Verbindungen ausgewählt aus den Formeln I und II, mindestens 1 Verbindung der Formel III und mindestens 1 Verbindung der Formel IV enthält.

5. Medium nach mindestens einem der Ansprüche 1 bis 4, **dadurch gekennzeichnet, dass** es mindestens eine Verbindung der Formel I enthält, worin m 0 und Z CH₂O bedeutet.

6. Flüssigkristallines Medium nach mindestens einem der Ansprüche 1 bis 5, **dadurch gekennzeichnet, dass** es mindestens 3 Verbindungen ausgewählt aus den Formeln IIa bis IIe 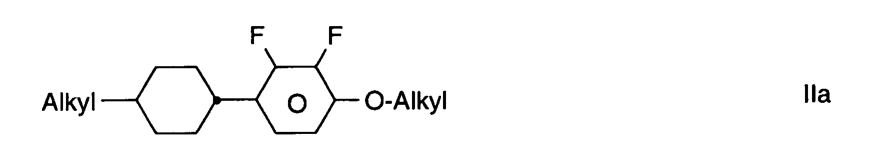 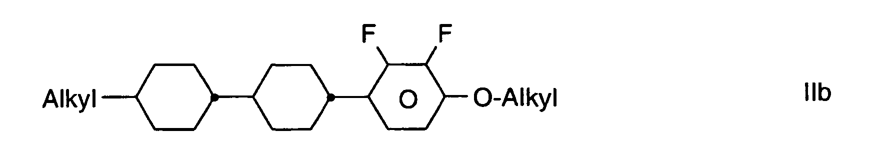 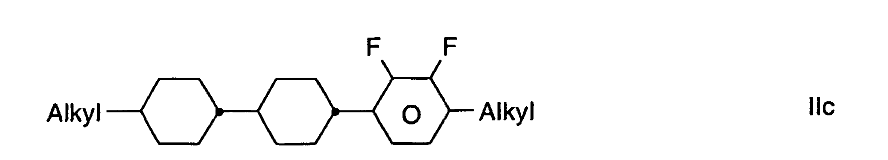 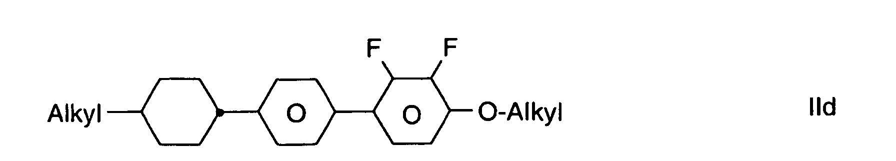 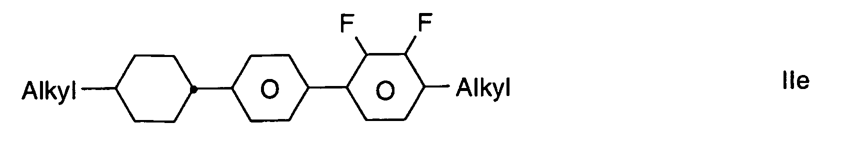 enthält, worin Alkyl C₁₋₆-Alkyl bedeutet.

7. Flüssigkristallines Medium nach mindestens einem der Ansprüche 1 bis 6, **dadurch gekennzeichnet, dass** es mindestens eine Verbindung ausgewählt aus den Formeln IIIa bis IIId 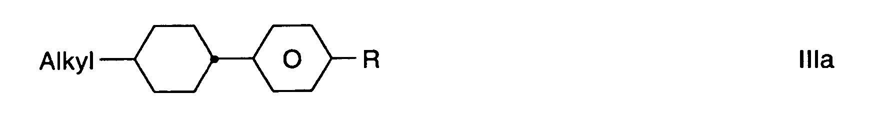 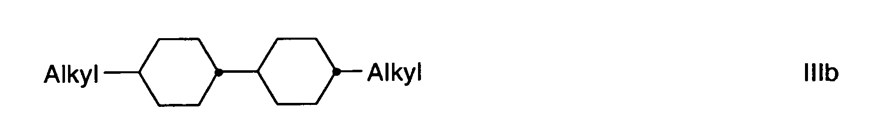 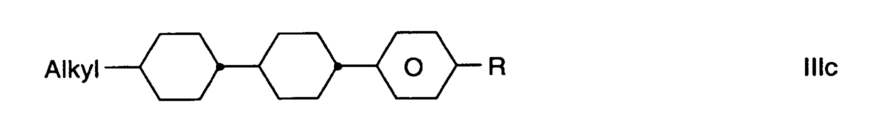 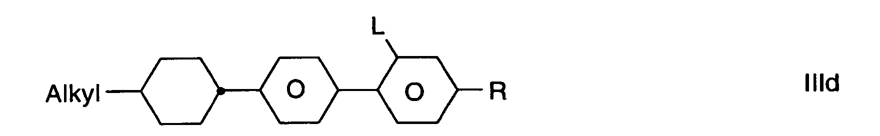 enthält, worin Alkyl C₁₋₆-Alkyl, R C₁₋₆-Alkyl oder -Alkoxy und L H oder F bedeutet.

8. Flüssigkristallines Medium nach mindestens einem der Ansprüche 1 bis 7, **dadurch gekennzeichnet, dass** es mindestens eine Verbindung ausgewählt aus den Formeln IVa bis IVg 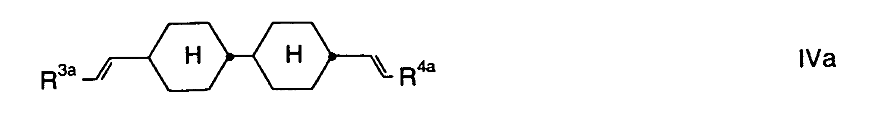 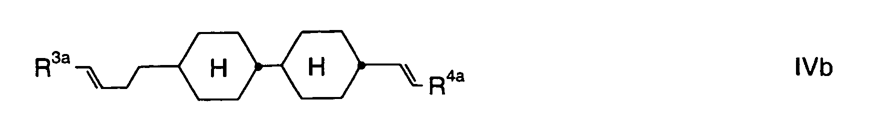 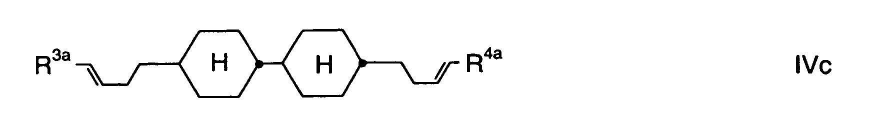 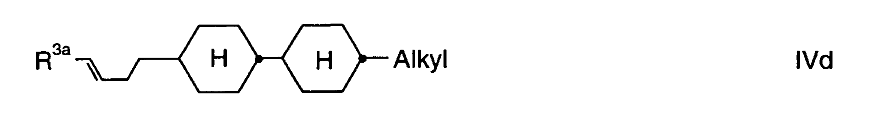 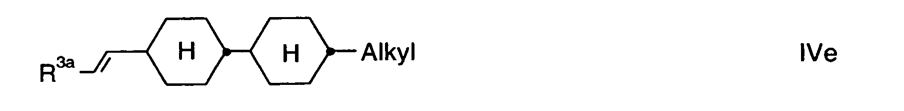 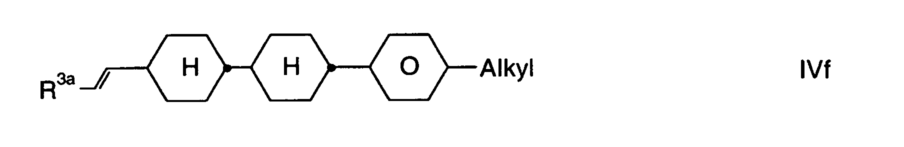 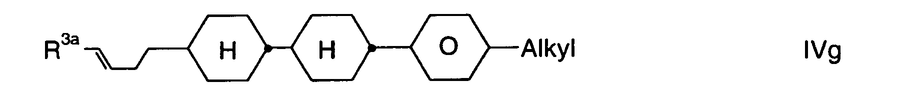 enthält, worin R^{3a} und R^{4a} unabhängig voneinander H, CH₃, C₂H₅ oder n-C₃H₇ bedeuten und Alkyl C₁₋₆-Alkyl bedeutet.

9. Flüssigkristallines Medium nach einem der Ansprüche 1 bis 8,
**dadurch gekennzeichnet, dass** es im Wesentlichen enthält:
2-30 Gew.-% einer oder mehrerer Verbindungen der Formel I,
40-85 Gew.-% einer oder mehrerer Verbindungen der Formel II,
2-25 Gew.-% einer oder mehrerer Verbindungen der Formel III und
2-25 Gew.-% einer oder mehrerer Verbindungen der Formel IV.

10. Elektrooptische Anzeige mit einer Aktivmatrix-Addressierung basierend auf dem VA- oder ECB-Effekt, **dadurch gekennzeichnet, dass** sie als Dielektrikum ein flüssigkristallines Medium nach einem der Ansprüche 1 bis 9 enthält.

## Revendications

1. Milieu de cristaux liquides basé sur un mélange de composés polaires présentant une anisotropie diélectrique négative, lequel milieu contient au moins un composé de la formule I 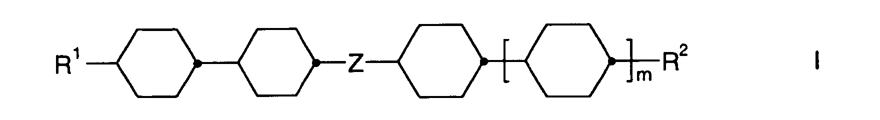 dans laquelle
R¹ et R² sont, indépendamment l'un de l'autre, un groupe alkyle, alkoxy ou alkényle avec 1 à 12 atomes de C, étant entendu qu'il est possible qu'un ou plusieurs groupes CH₂ dans ces radicaux soient remplacés, dans chaque cas indépendamment les uns des autres, par -O-, -CH=CH-, -CO-, -OCO- ou -COO- d'une manière telle que des atomes d'oxygène ne soient pas liés directement les uns aux autres,
Z est OCH₂ ou CH₂O, et
m est 0 ou 1
et contient additionnellement un ou plusieurs composés de la formule II 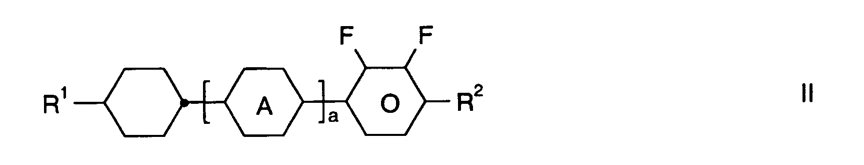 dans laquelle
R¹ et R² ont, indépendamment l'un de l'autre, l'une des significations de la formule I, 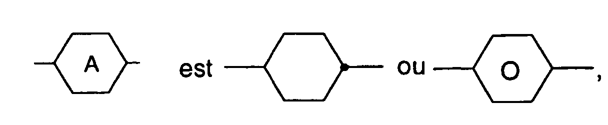 et
a est 0 ou 1.

2. Milieu selon la revendication 1, **caractérisé en ce qu'**il contient additionnellement au moins un composé de la formule III 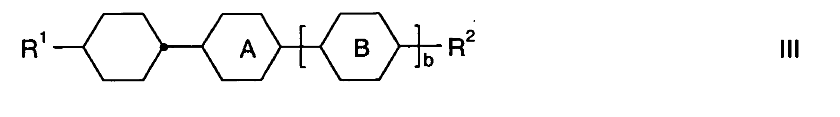 dans laquelle
R¹ et R² ont, indépendamment l'un de l'autre, l'une des significations de la formule I, 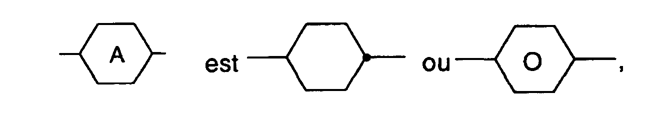 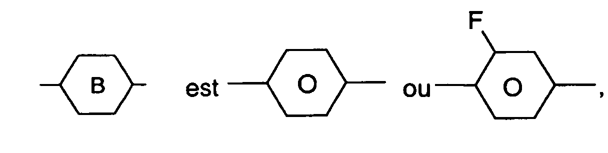 et
b est 0 ou 1.

3. Milieu selon au moins l'une des revendications 1 et 2, **caractérisé en ce qu'**il contient additionnellement un ou plusieurs composés de la formule IV 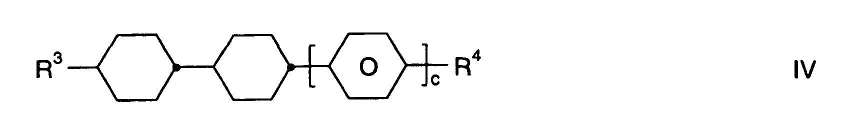 dans laquelle
R³ est un groupe alkényle avec 2 à 7 atomes de C,
R⁴ a l'une des significations de R¹ dans la formule I, et
c est 0 ou 1.

4. Milieu selon au moins l'une des revendications 1 à 3, **caractérisé en ce qu'**il comprend essentiellement 4 composés ou plus choisis parmi les formules I et II, au moins 1 composé de la formule III et au moins 1 composé de la formule IV.

5. Milieu selon au moins l'une des revendications 1 à 4, **caractérisé en ce qu'**il comprend au moins un composé de la formule I dans laquelle m est 0 et Z est CH₂O.

6. Milieu de cristaux liquides selon au moins l'une des revendications 1 à 5, **caractérisé en ce qu'**il contient au moins 3 composés choisis parmi les formules IIa à IIe 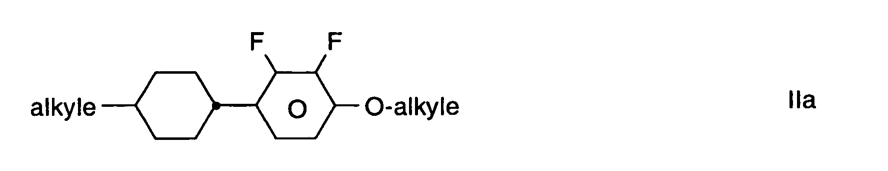 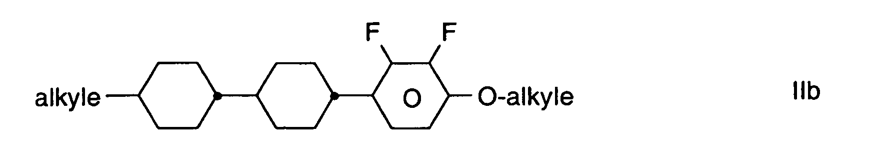 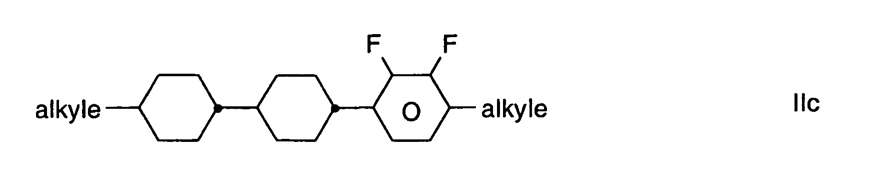 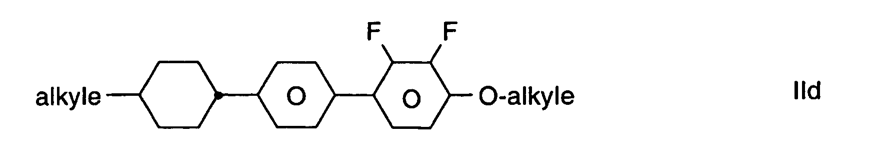 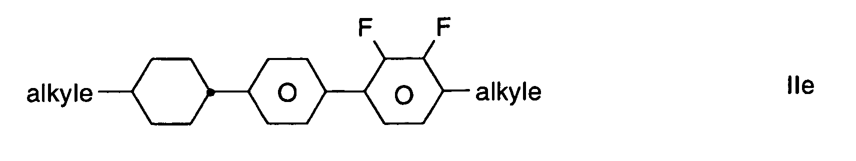 dans lesquelles alkyle est C₁₋₆-alkyle.

7. Milieu de cristaux liquides selon au moins l'une des revendications 1 à 6, **caractérisé en ce qu'**il contient au moins un composé choisi parmi les formules IIIa à IIId 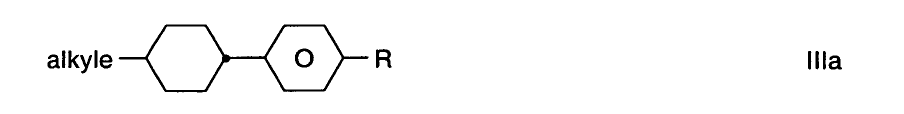 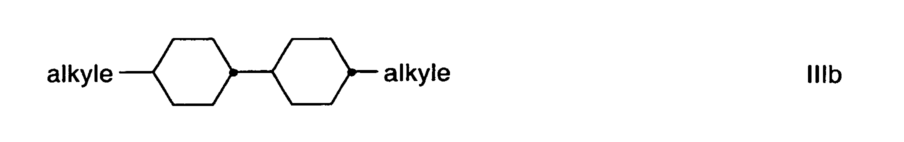 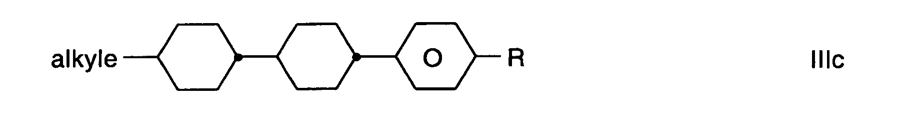 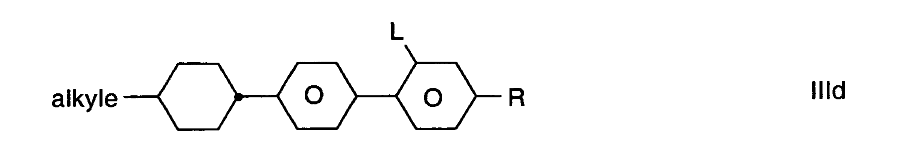 dans lesquelles alkyle est C₁₋₆-alkyle, R est C₁₋₆-alkyle ou -alkoxy et L est H ou F.

8. Milieu de cristaux liquides selon au moins l'une des revendications 1 à 7, **caractérisé en ce qu'**il contient au moins un composé choisi parmi les formules IVa à IVg 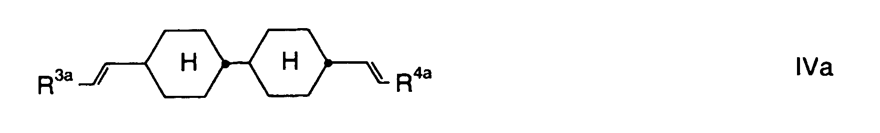 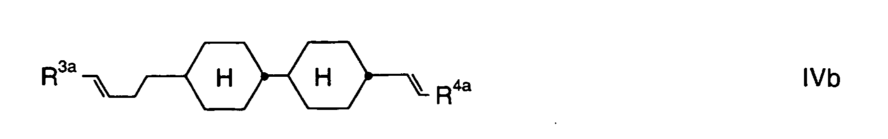 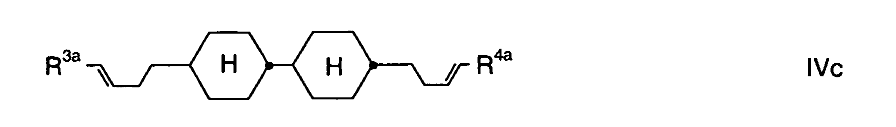 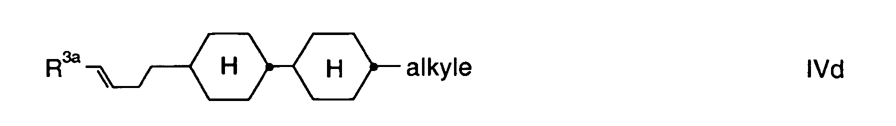 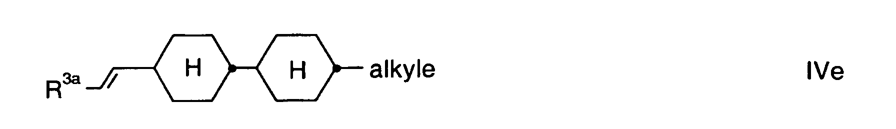 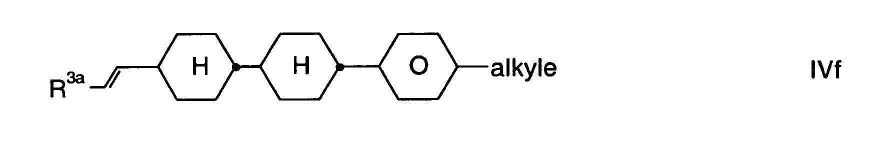 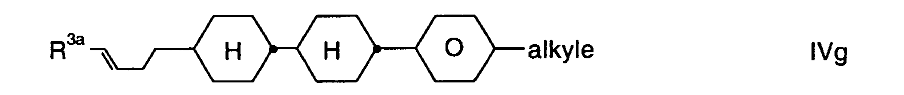 dans lesquelles R^{3a} et R^{4a} sont, indépendamment l'un de l'autre, H, CH₃, C₂H₅ ou n-C₃H₇ et alkyle est C₁₋₆-alkyle.

9. Milieu de cristaux liquides selon l'une des revendications 1 à 8,
**caractérisé en ce qu'**il comprend essentiellement
2-30 % en poids d'un ou plusieurs composés de la formule I,
40-85 % en poids d'un ou plusieurs composés de la formule II,
2-25 % en poids d'un ou plusieurs composés de la formule III, et
2-25 % en poids d'un ou plusieurs composés de la formule IV.

10. Affichage électro-optique présentant un adressage par matrice active basé sur l'effet VA ou ECB, **caractérisé en ce qu'**il contient, en tant que diélectrique, un milieu de cristaux liquides selon l'une des revendications 1 à 9.
